Europäisches Patentamt

European Patent Office

Office européen des brevets

(19)

(11) **EP 0 605 699 B1**

(12) **FASCICULE DE BREVET EUROPEEN**

(45) Date de publication et mention
de la délivrance du brevet:
**07.03.2001 Bulletin 2001/10**

(21) Numéro de dépôt: **93916007.3**

(22) Date de dépôt: **16.07.1993**

(51) Int Cl.⁷: $H04N\ 9/31$

(86) Numéro de dépôt international:
**PCT/FR93/00727**

(87) Numéro de publication internationale:
**WO 94/03016 (03.02.1994 Gazette 1994/04)**

(54) **Projecteur d'images en couleurs**

Farbbildprojektor

Colour image projector

(84) Etats contractants désignés:
**DE FR GB**

(30) Priorité: **24.07.1992 FR 9209162**

(43) Date de publication de la demande:
**13.07.1994 Bulletin 1994/28**

(73) Titulaire: **THOMSON-CSF**
**75008 Paris (FR)**

(72) Inventeurs:
• **JOUBERT, Cécile**
**F-92402 Courbevoie Cédex (FR)**
• **PUECH, Claude**
**F-92402 Courbevoie Cédex (FR)**

• **LOISEAUX, Brigitte**
**F-92402 Courbevoie Cédex (FR)**
• **HUIGNARD, Jean-Pierre**
**F-92402 Courbevoie Cédex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 322 070        EP-A- 0 367 332**
**EP-A- 0 391 529        DE-A- 4 102 954**
**US-A- 4 145 712**

• **PATENT ABSTRACTS OF JAPAN vol. 15, no. 198**
**(P-1204)22 Mai 1991**

## Description

L'invention concerne les projecteurs d'images notamment vidéo, utilisant plusieurs faisceaux de lumière de couleurs différentes pour former l'image à projeter. Elle concerne particulièrement des moyens pour améliorer l'efficacité lumineuse de tels projecteurs.

Pour la projection d'images en couleurs, on s'oriente de plus en plus vers les dispositifs de projection d'images mettant en oeuvre des techniques de modulation spatiale de la lumière. Ces techniques utilisent des valves électro-optiques ou écrans de modulation spatiale de lumière, appelés "écrans de modulation," dans la suite de la description. Par modulation spatiale de lumière, il faut comprendre qu'on projette globalement un faisceau sur toute la surface d'une image à projeter, par opposition aux systèmes de modulation temporelle dans laquelle un pinceau de lumière fin (correspondant à un point d'image seulement et non à toute l'image) est modulé temporellement en même temps qu'il balaye la surface d'un écran de projection.

Un écran de modulation spatiale est constitué le plus souvent par un écran du type L.C.D. (de l'anglais "Liquid Crystal Display) comprenant un arrangement matriciel de cellules à cristaux liquides, chaque cellule correspondant à une surface élémentaire d'image ou pixel.

L'image polychrome peut être obtenue soit à l'aide de trois écrans de modulation formant chacun une image monochrome de l'une des trois couleurs primaires rouge, verte et bleue, soit à partir d'un unique écran modulateur trichrome c'est-à-dire un écran modulateur muni de filtres colorés suivant les trois couleurs primaires.

Dans le cas des projecteurs utilisant un unique écran de modulation trichome, au moins trois surfaces élémentaires d'image voisines constituent un pixel trichrome. Chacune de ces trois surfaces élémentaires correspond à l'une des couleurs primaires rouge, verte, bleue en fonction de la couleur du filtre qui lui est affecté.

Les solutions utilisant un unique écran de modulation trichrome sont bien connues, elles présentent l'avantage d'être particulièrement simples. Par contre elles conduisent à une perte de luminosité d'un facteur au moins trois sur chacune des trois composantes chromatiques, perte imposée par la répartition spatiale des filtres colorés.

Dans le cas des projecteurs utilisant trois écrans modulateurs formant chacun une image monochrome, chaque écran modulateur module spatialement un faisceau de lumière colorée suivant une couleur primaire, et l'image polychrome est obtenue par la superposition des trois images monochromes sur un écran de projection.

Les images formées par les trois écrans modulateurs sont projetées sur l'écran de projection à l'aide d'un objectif unique commun au trois images monochromes, ou bien à l'aide de trois objectifs. Les faisceaux colorés des différentes couleurs primaires, sont obtenus à partir d'un unique faisceau de lumière blanche produit par une source de lumière appelée "lampe blanche", derrière laquelle sont placés des filtres colorés. Généralement les lampes blanches utilisées sont du type lampe à arc, et plus particulièrement du type à halogène qui présente un bon rendement lumineux.

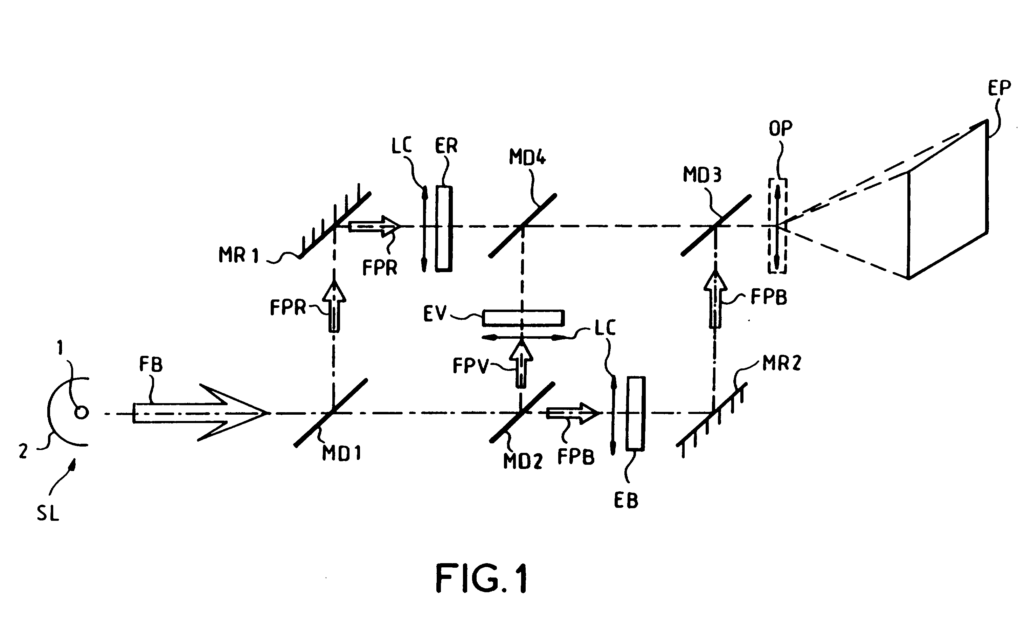

La figure 1 montre de façon schématique un projecteur d'images en couleurs classique, du type à trois écrans modulateur tel que ci-dessus défini.

Le projecteur comporte une source de lumière blanche SL formée par une lampe à arc 1 disposée au foyer d'un réflecteur 2. Cette disposition engendre un faisceau de lumière blanche FB de faible divergence, se propageant en direction d'un ensemble modulateur comprenant notamment, d'une part trois écrans de modulation ER, EV, EB destinés chacun à former une image ayant l'une des couleurs primaires ; cet ensemble comprend d'autre part des miroirs de renvoi MR1, MR2 et des miroirs dichroïques MD1 à MD4, à l'aide desquels le faisceau de lumière blanche FB est séparé en trois faisceaux colorés FPR, FPV, FPB dont la bande spectrale correspond à l'une des couleurs primaires rouge, vert et bleue. Les miroirs dichroïques sont des miroirs sélectifs en longueur d'onde. c'est-à-dire qu'ils transmettent un certain domaine spectral et réfléchissent le domaine complémentaire.

Les trois faisceaux colorés traversent chacun un écran modulateur ER, EV, EB par lequel ils sont modulés. Ils sont ensuite superposés sur un même axe suivant lequel ils se propagent en direction d'un objectif de projection OP. Ils passent par cet objectif de projection OP, et l'image monochrome qu'ils portent chacun est projetée sur un écran de projection EP. La superposition des trois images monochromes produit l'image trichrome.

On a représenté sur la figure des lentilles de champs LC qui de façon classique sont disposées au voisinage de chaque écran de modulation ER, EV, EB. Il est à noter en outre que des écrans de modulation du type LCD agissent sur la direction de polarisation de la lumière, et par conséquent la lumière qui les traverse doit être polarisée. Il faut donc généralement pour chaque écran de modulation, un polariseur et un analyseur (non représentés) disposés respectivement en amont et en aval de l'écran de modulation.

Les projecteurs d'images couleur du type utilisant un ou plusieurs écrans de modulation spatiale de la lumière sont intéressants notamment pour leur compacité, par rapport aux techniques utilisant des tubes cathodiques. Cependant ces projecteurs à écrans de modulation ont l'inconvénient de présenter un mauvais rendement lumineux.

En effet, dans le cas pourtant le plus favorable d'un projecteur à trois écrans de modulation, la transmission globale de lumière est communément évaluée à environ 1 %, ce qui signifie que seulement 1 % de la lumière produite par la source de lumière blanche SL, sort de l'objectif de projection OP.

Les inventeurs ont constaté que pour une part non négligeable, ce mauvais rendement lumineux était imputable à la lampe elle-même servant à produire la lumière, compte tenu de la nécessité de respecter une balance colorimétrique donnée entre les trois couleurs primaires, rouge, vert et bleu, balance colorimétrique qui est imposée par la courbe de sensibilité de l'oeil. Les lampes utilisées sont généralement des lampes à arc de type "Métal Halide", c'est -à-dire à halogénures métalliques, qui présentent un haut rendement lumineux en lumens par Watt. Mais, l'un des principaux inconvénients de ces lampes est que leur spectre d'émission n'est jamais rigoureusement adapté aux exigences de la colorimétrie, elles sont généralement pauvres en lumens dans l'une voire deux des trois couleurs primaires.

Il est à noter à ce sujet, que la fabrication de ces lampes à arc pose particulièrement des problèmes pour obtenir, avec une bonne efficacité, un spectre d'émission compatible avec la production de lumens aux trois couleurs primaires.

On peut observer de façon courante, que pour obtenir ladite balance colorimétrique entre les trois couleurs primaires, on est amené à supprimer une certaine quantité de lumens de la primaire excédentaire. Il en résulte une diminution importante du rendement lumineux.

En vue d'augmenter l'efficacité lumineuse des projecteurs d'images trichromes utilisant un faisceau de lumière traversant un système de modulation spatiale, l'invention propose de produire la lumière, dans les trois bandes spectrales correspondant aux trois couleurs primaires, à l'aide d'au moins une source monochromatique. Deux types de réalisation préférentielles sont envisagées : dans l'une, trois sources monochromatiques correspondant aux couleurs primaires désirées sont utilisées chacune en conjonction avec un écran de modulation spatiale respectif. Dans une autre réalisation avantageuse, on utilise comme source de lumière une source de lumière blanche à laquelle on associe une source de lumière monochromatique à une longueur d'onde de couleur primaire pour laquelle le spectre de la source blanche est partiellement déficitaire.

Jusqu'à maintenant, excepté dans le cas de modulateurs de lumière à réseaux de miroirs tels que décrits dans le brevet EP-A-391 529, on a toujours considéré qu'une source de lumière monochromatique, en pratique une source de lumière cohérente (laser), était adaptée uniquement à faire de la projection par modulation temporelle et balayage de faisceau sur l'écran de projection. En effet, la propriété habituelle des sources monochromatiques cohérentes est la concentration de leur faisceau sur une section très petite, ce qui les rend particulièrement adaptées à un balayage d'écran et au contraire inadaptées à une projection globale par modulation spatiale.

Le brevet US 4 145 712 décrit un système de projection d'image à deux lasers, à modulation temporelle et balayage d'écran.

Le brevet EP 0 322 070 décrit une combinaison de trois sources de lumière à spectres centrés respectivement sur les portions bleues, vertes et rouges du spectre visible. Ces sources ne sont pas monochromatiques.

Le brevet DE-A-4102954 décrit un projecteur d'images à trois modulateurs spatiaux de lumière, n'utilisant pas de source laser.

Le brevet EP-A-367 322 décrit un projecteur d'images à trois sources cathodique, n'utilisant pas de source laser.

On sait maintenant bien réaliser des sources monochromatiques d'étendue spatiale non négligeable, qui peuvent se prêter avantageusement à une projection avec modulation spatiale, ce qui n'était a priori pas concevable avec les sources monochromatiques habituelles du fait de leur pinceau étroit.

L'invention propose donc, pour améliorer le rendement lumineux global d'un système de projection à modulation spatiale, d'utiliser une ou plusieurs sources monochromatiques cohérentes.

Ainsi par exemple, l'utilisation d'une source de lumière supplémentaire rouge permet d'utiliser au mieux d'un point de vue colorimétrique, les parties bleues et vertes du spectre des lampes à arc.

Plus généralement, le rajout d'une source, par exemple rouge ou verte ou bleue, autorise une plus grand liberté dans le choix des sources blanches qui, jusqu'à ce jour, sont exclusivement choisies en fonction du caractère trichromatique de leur spectre. En conséquence, il peut en résulter aussi une simplification dans la fabrication des lampes, du fait qu'elles n'ont plus à présenter un spectre d'émission aussi étendu en longueur d'onde.

Selon l'invention, on associe donc une lampe blanche et une source colorée monochromatique complémentaire, la source colorée étant une source monochromatique et cohérente.

L'avantage apporté par l'utilisation d'une source supplémentaire en lumière monochromatique et cohérente, est qu'en plus de l'amélioration liée à la balance colorimétrique, on peut améliorer la transmission en lumière du projecteur sur la voie rouge, ou bleue ou verte considérée, d'un facteur de l'ordre de 10 à puissance lumineuse émise égale.

Il est à noter que l'invention s'applique aussi bien au cas où la modulation spatiale de lumière est réalisée avec un unique écran de modulation polychrome (écran muni de filtres colorés), que dans le cas des projecteurs utilisant un écran de modulation par couleur primaire.

L'invention concerne donc un projecteur d'images comportant au moins un écran de modulation spatiale de la lumière un générateur de lumière produisant de la lumière dans au moins trois bandes spectrales correspondant à chacune à l'une des trois couleurs dites primaires, le générateur de lumière comportant au moins deux sources de lumière pour produire la lumière des différentes bandes spectrales, caractérisé en ce que le générateur de lumière comporte comme première source (S1) une source blanche et comme deuxième source (S2) au moins une source laser essentiellement monochromatique dans une couleur pour laquelle le spectre de la source blanche est déficitaire.

L'invention sera mieux comprise à la lecture de la description qui suit, faite à titre d'exemple en référence aux figures annexées parmi lesquelles :

- la figure 1 déjà décrite montre schématiquement un projecteur d'images couleurs d'un type classique ;
- la figure 2 montre de manière schématique une forme de réalisation de l'invention, appliquée à un projecteur d'images du type utilisant plusieurs écrans de modulation où un faisceau produit par une source supplémentaire de lumière contribue seul à l'éclairement de l'écran de modulation correspondant ;
- la figure 3 montre schématiquement une version de l'invention dans laquelle les faisceaux produits par deux sources de lumière montrées à la figure 2, sont superposés pour éclairer conjointement le ou les écrans de modulation correspondant ;
- la figure 4 représente une autre version relative à la superposition des faisceaux produits par les deux sources de lumière montrées à la figure 2.
- la figure 5 représente un autre mode de réalisation d'un projecteur d'images trichromes conforme à l'invention, utilisant une source de lumière monochromatique et cohérente pour chaque couleur primaire.

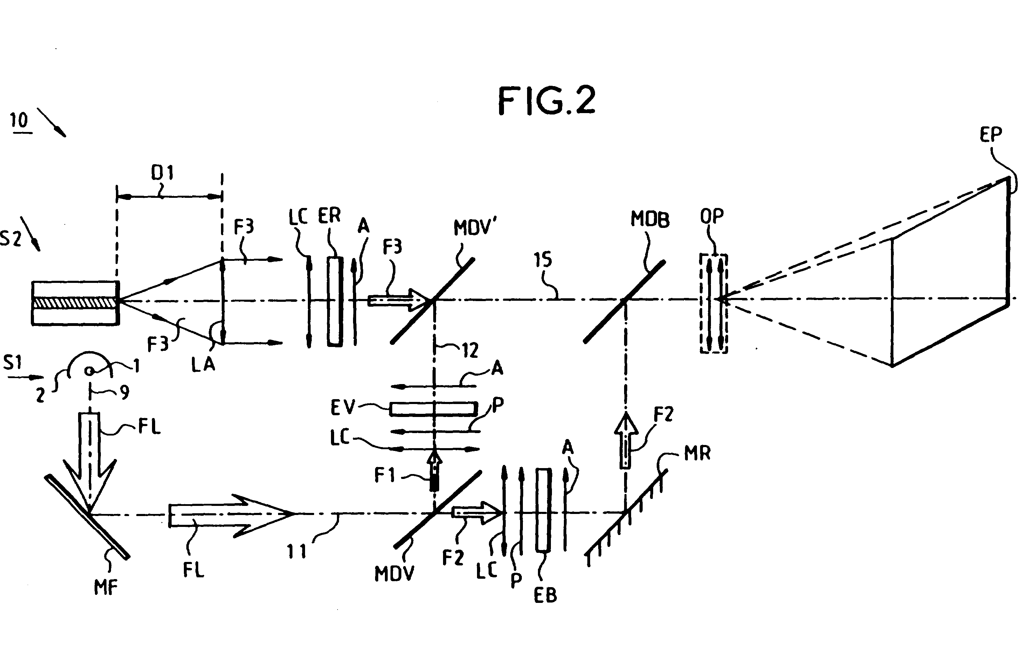

La figure 2 représente un projecteur d'images trichrome 10 conforme à l'invention.

Dans l'exemple montré à la figure 2, le projecteur d'image 10 comporte trois écrans de modulation spatiale de lumière EV, EB, ER, prévus chacun pour réaliser une image monochrome suivant l'une des couleurs primaires vert, bleu et rouge ; les écrans de modulation sont par exemple des écrans matriciels à cristaux liquides en eux-mêmes classiques. En conséquence, chaque écran de modulation EV, EB, ER est éclairé par un faisceau coloré approprié : le premier écran modulateur EV module le vert, il est éclairé par un premier faisceau de lumière F1 ou faisceau coloré correspondant à la couleur verte ; le second écran modulateur EB module le bleu, il est éclairé par un second faisceau coloré F2 dont la bande spectrale correspond au bleu ; le troisième écran modulateur ER module le rouge, il est éclairé par un troisième faisceau coloré F3 correspondant au rouge.

Suivant une caractéristique de l'invention, la lumière des différentes composantes spectrales des trois faisceaux colorés F1, F2, F3, est produite à l'aide d'un générateur comprenant au moins deux sources de lumière S1, S2.

Dans l'exemple non limitatif décrit, l'une des sources de lumière produit la lumière de l'un des faisceaux colorés, et l'autre source produit la lumière constituant les deux autres faisceaux colorés : dans l'exemple représenté, la première source S1 produit la lumière servant à former les premier et second faisceaux colorés F1, F2 (de couleur respectivement verte et bleue), et la seconde source S2 est une source supplémentaire qui produit la lumière (rouge) formant le troisième faisceau coloré F3. Bien entendu, dans l'esprit de l'invention, la seconde source S2 pourrait produire une lumière de couleur primaire différente, bleue par exemple, de telle sorte que la première source S1 produirait la lumière correspondant au vert et au rouge.

Suivant l'invention, la seconde source S2 est une source de lumière essentiellement monochromatique et de préférence cohérente. Dans l'exemple non limitatif décrit, la seconde source S2 est une diode laser à semiconducteur émettant dans le rouge, par exemple à 625 nanomètres.

La première source S1 est constituée par exemple par une lampe à arc 1 situé au foyer d'un réflecteur 2 parabolique, de façon à produire un faisceau de lumière FL à rayons parallèles, qui peut être un faisceau de lumière blanche. Mais dans l'invention la composante rouge étant fournie par la seconde source S2, la première source S1 peut présenter une déficience dans le rouge très prononcée puisque le rouge qu'elle émet ne sera pas prépondérant pour éclairer le troisième écran modulateur ER.

Le faisceau de lumière blanche FL est émis pas la première source S1, suivant un axe 9, en direction d'un miroir MF du type miroir froid, assurant en outre une fonction de filtre ultra-violet. Le miroir froid MF réfléchit le faisceau de lumière blanche FL suivant un second axe 11 de propagation, en direction d'un miroir dichroïque MDV agissant sur la composante verte. Sous l'action du miroir dichroïque MDV, le faisceau de lumière blanche FL est séparé en deux faisceaux colorés dont l'un est le premier faisceau coloré F1 correspondant à la composante verte, et l'autre est le second faisceau coloré F2 contenant la composante bleue.

Le premier faisceau F1 coloré est réfléchi en direction du premier écran modulateur EV, suivant un troisième axe 12 perpendiculaire au second l'axe 11 de propagation du faisceau de lumière blanche FL. Le second faisceau F2 se propage en direction du second écran modulateur EB, suivant un même axe 11 que le faisceau de lumière blanche FL.

Avant d'atteindre respectivement le premier et le second écran modulateur EV, EB, le premier et le second faisceau Fl, F2 passent chacun, de façon en elle-même classique, par une lentille de champ LC et par un polariseur P.

On rappelle que pour des écrans modulateurs du type matrice à cristaux liquide (L.C.D.), l'effet électro-optique dans le cristal liquide nécessite de travailler en lumière polarisée. La lumière provenant de la première source de lumière S1 n'ayant pas de direction de polarisation particulière, la direction de polarisation convenable est conférée par l'interposition d'un polariseur P qui ne laisse passer que la lumière ayant la direction de polarisation choisie.

Les faisceaux colorés F1, F2 sont modulés par leur passage dans les écrans modulateurs EV, EB et cette modulation est matérialisée, c'est-à-dire révélée à l'aide d'un analyseur A disposé derrière chaque écran modulateur EV, EB. Il est à noter que dans ce cas les analyseurs sont généralement constitués par des polariseurs.

Après avoir traversé le premier écran modulateur EV et l'analyseur A, le premier faisceau coloré F1 se propage en direction d'un second miroir dichroïque MDV' actif pour la partie verte du spectre. Ce second miroir dichroïque MDV' réfléchit le premier faisceau coloré F1 à 90°, sur un quatrième axe appelé axe optique 15, en direction d'un troisième miroir dichroïque MDB actif pour la partie bleue du spectre. Ce troisième miroir dichroïque MDB est lui-même suivi sur l'axe optique 15, par un objectif de projection OP.

Après avoir traversé le second écran modulateur EB et l'analyseur A, le second faisceau coloré F2 se propage en direction d'un miroir de renvoi MR par lequel il est réfléchi en direction du troisième miroir dichroïque MDB. Le second faisceau coloré (bleu) F2 est ensuite réfléchi par le troisième miroir dichroïque MDB en direction de l'objectif de projection OP, suivant l'axe optique 15.

Le troisième miroir dichroïque MDB étant sensible au bleu, le premier faisceau coloré (vert) F1 le traverse en subissant seulement une atténuation. Le premier et le second faisceaux colorés F1, F2 sont ainsi superposés sur l'axe optique 15, et se propagent en direction de l'objectif de projection OP.

Dans l'exemple non limitatif décrit, la seconde source S2 est disposée de manière que l'axe optique 15 constitue l'axe de propagation du troisième faisceau coloré F3. Ce troisième faisceau F3 (rouge) est formé de rayons divergents qui sont rendus parallèles, à l'aide d'une lentille d'adaptation LA en elle-même classique. La distance D1 entre la lentille d'adaptation LA et la seconde source S2, correspond à la distance nécessaire pour conférer au troisième faisceau coloré F3 une section suffisante pour éclairer entièrement le troisième écran modulateur ER. Le troisième faisceau coloré F3 formé de rayons parallèles, se propage en direction du troisième écran modulateur ER qu'il rencontre après passage dans une lentille de champ LC. Ayant été modulé par le troisième écran du modulateur ER, le troisième faisceau coloré passe ensuite par un analyseur A (comme dans le cas des premier et second faisceaux colorés F1, F2), et il se propage en direction de l'objectif de projection OP qu'il atteint après avoir traversé les second et troisième miroirs dichroïque MDV' et MDB respectivement sensibles à la composante verte et à la composante bleue.

Les trois faisceaux colorés F1, F2, F3 sont alors porteurs d'une image monochrome de l'une des couleurs primaires. Ils sont alors superposés sur l'axe optique 15, et ils sont projetés par l'objectif de projection OP sur un écran de projection EP.

La superposition sur l'écran de projection EP des trois couleurs vert, bleu et rouge engendre du blanc, si la balance colorimétrique convenable est respectée.

Considérons le cas par exemple où la couleur primaire monochromatique rouge est choisie à 625 nanomètres comme mentionné précédemment, et où les primaires bleue et verte sont extraites du spectre d'une lampe à arc, avec les coordonnées trichromatiques suivantes (ces coordonnées étant établie de façon classique pour être reportées dans un diagramme des couleurs défini suivant les normes de la Commission Internationale de l'Eclairage) :

- Rouge : 0,7 ; 0,23
- Vert : 0,245 ; 0,73
- B : 0,161 ; 0,014

Dans ces conditions on obtient par exemple 15 lumens de blanc, en superposant 2,5 lumens de rouge, 12 lumens de vert et 0,5 lumens de bleu. On effectue la conversion lumens visuels $P_L$ en Watts énergétiques $P_W$ par la formule :

$$P_W = P_L/k.V(\lambda), \qquad \text{où } k = 683 \text{ lm/W},$$

et où $V(\lambda)$ est la courbe de sensibilité de l'oeil.

Pour que la balance colorimétrique soit respectée, il faut avec l'invention régler séparément la puissance délivrée par la source supplémentaire ou seconde source S2, c'est-à-dire la puissance dans le rouge dans l'exemple, par rapport à la puissance maximale de vert et de bleu délivrée par la lampe blanche ou première source S1.

Dans l'art antérieur, la lampe blanche a un spectre d'émission dans tout le visible, et la balance colorimétrique se fait à postériori par réduction des primaires excédentaires. Aucun réglage au niveau du spectre d'émission n'est possible, et une quantité non négligeable de lumière est perdue.

Avec l'invention on a donc une amélioration du rendement lumineux qui est obtenue grâce à la source essentiellement monochromatique S2.

En effet, pour chacune des voies bleu et verte dont la lumière est produite par la première source S1 constituée par une lampe à arc, la transmission globale du projecteur résulte entre autres des différents coefficients de transmission énumérés ci-après :

- le réflecteur 2 utilisé dans la source S1 présente un coefficient de transmission de l'ordre de 0,25 ;
- on interpose généralement sur le trajet de la lumière fournie par une source de lumière telle que la source S1, un dispositif (non représenté) de filtres UV et IR, dont le coefficient de transmission est de l'ordre de 0,9 ;

- un miroir dichroïque a un coefficient de transmission de l'ordre de 0,8 ;
- un polariseur P a un coefficient de transmission de l'ordre de 0,4 ;

Avec le montage de l'invention, la transmission sur la voie utilisant la seconde source S2 est fortement améliorée notamment pour les raisons suivantes :

- le rendement des miroirs dichroïques est meilleur pour des rayonnements monochromatiques et faiblement divergents, que pour des rayonnements ayant des bandes spectrales étendues (plusieurs dizaines de nanomètres), et une plus forte divergence angulaire (de l'ordre de $\pm 4°$). Le coefficient de transmission d'un miroir dichroïque est évalué à environ 0,9 dans le cas d'une lumière monochromatique.
- La seconde source S2 peut être d'un type classique à semiconducteur, produisant une lumière ayant "directement" une direction de polarisation. Il n'est pas nécessaire dans ce cas de disposer de polariseur P devant l'écran modulateur, comme dans l'exemple montré à la figure 2 pour l'écran modulateur ER de la voie rouge. On évite ainsi les pertes dans le polariseur. De plus la collection de la lumière est plus efficace lorsque la lumière est monochromatique et cohérente.

Ainsi, on peut estimer que globalement, le caractère monochromatique et cohérent de la lumière émise par la seconde source S2 entraîne une amélioration de la transmission lumineuse d'un facteur 10, sur la voie concernée, à savoir "rouge" dans l'exemple. En reprenant l'exemple donné plus haut pour la voie "rouge", à 625 nanomètres, 2,5 lumens de rouge équivalent à environ 11 mW. En tenant compte d'un facteur de transmission sur la voie "rouge" évalué maintenant à 10 %, il faut émettre une puissance optique d'environ 110 mW de rouge, pour obtenir 15 lumens de blanc sur l'écran de projection EP, alors que dans l'art antérieur il faudrait environ 1 Watt de rouge.

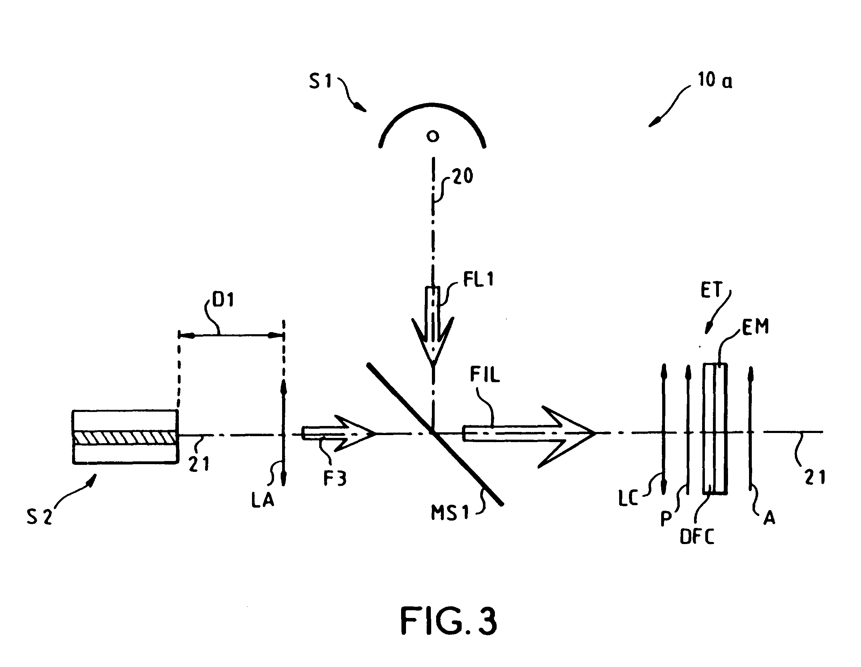

La description qui précède de l'invention est faite en référence aux projecteurs d'images utilisant trois écrans de modulation éclairés par des faisceaux de couleurs différentes. Mais l'invention peut s'appliquer aussi au cas des projecteurs utilisant un unique écran de modulation trichrome (utilisant des filtres colorés), éclairé par un faisceau de lumière blanche, comme illustré par la figure 3.

La figure 3 représente partiellement un projecteur d'images trichromes 10a utilisant deux sources de lumière S1, S2 conformément à l'invention, pour éclairer un unique écran de modulation EM associé à un dispositif à filtres colorés DFC, afin de constituer un écran

modulateur trichrome ET. Bien entendu, l'écran de modulation EM peut être en lui-même d'un type semblable aux écrans de modulation des exemples précédents.

Les sources S1, S2 peuvent avoir les mêmes caractéristiques que dans le cas de l'exemple de la figure 2, par exemple, d'une part la première source S1 peut être constituée par une lampe à arc, produisant un faisceau de lumière blanche FL1 ayant une déficience très prononcée dans le rouge ; et d'autre part la seconde source S2 peut être une diode laser à semiconducteur émettant dans le rouge, c'est-à-dire produisant le faisceau coloré F3 de couleur rouge. Bien entendu dans ce dernier cas aussi, la seconde source S2 pourrait produire une lumière de couleur primaire différente, bleue par exemple, de telle sorte que la première source S1 produirait principalement la lumière correspondant au vert et au rouge.

Le faisceau de lumière blanche FL1 et le faisceau coloré F3 sont émis respectivement suivant un premier et un second axes 20, 21 perpendiculaires entre eux.

Comme dans l'exemple de la figure 2, le faisceau coloré F3 rouge passe par une lentille d'adaptation LA située à une distance D1 de la seconde source S2, afin de conférer au faisceau coloré F3 des rayons sensiblement parallèles et une section suffisante pour éclairer entièrement l'écran de modulation trichrome ET.

Les deux faisceaux FL1 et F3 se propagent en direction d'un même miroir dichroïque MS1, dont la fonction est de superposer ces deux faisceaux afin d'obtenir un unique faisceau contenant les bandes spectrales des trois couleurs primaires.

Le miroir dichroïque MS1 est un miroir sélectif en longueurs d'onde d'un type en lui-même classique, constitué par exemple par des couches diélectriques superposées. Il est réalisé pour d'une part transmettre les longueurs d'ondes du faisceau coloré F3 produit par la seconde source S2, et pour d'autre part réfléchir le faisceau FL1 produit par la première source S1. Dans l'exemple décrit où le faisceau coloré F3 est rouge, centré à une longueur d'onde $\lambda_r$ de 660 nanomètres par exemple, les longueurs d'onde du faisceau FL1 étant comprises par exemple entre 470 et 680 nanomètres, la longueur d'onde de coupure $\lambda_c$ du miroir dichroïque MS1 doit être un peu inférieure à la longueur d'onde rouge $\lambda_r$, afin par exemple de réfléchir toutes les composantes du faisceau FL1 inférieures à 660 nanomètres, et transmettre le faisceau coloré F3 pour sa part supérieure à la longueur d'onde de coupure $\lambda_c$, Toute l'énergie de la première source S1 comprise entre 600 nanomètres et 660 nanomètres peut ainsi être utilisée, pour éclairer l'écran modulateur trichrome ET.

Le faisceau coloré F3 étant transmis, il conserve son axe de propagation 21 qui constitue un axe principal sur lequel est disposé l'écran modulateur trichrome ET.

Le miroir dichroïque MS1 est disposé de manière à réfléchir suivant l'axe principal 21, le faisceau FL1 provenant de la première source S1, de telle sorte que ce faisceau FL1 est superposé, sur cet axe principal, au faisceau coloré F3. Les deux faisceaux FL1, F3 se propageant dans une même direction, ils sont ainsi regroupés et constituent un même faisceau dit d'illumination FIL, contenant les trois bandes spectrales correspondant aux couleurs primaires rouge, verte et bleue. Le faisceau d'illumination FIL se propage en direction de l'écran de modulation ET auquel il parvient après être passé successivement par une lentille de champ LC, un polariseur P, puis le dispositif de filtres colorés DFC symbolisé sur la figure 3 par un rectangle. En fait un tel dispositif comprend généralement des filtres (non représentés) de couleurs rouges, vertes et bleues, chaque filtre étant disposé devant la surface élémentaire d'image (non représentée) qui correspond à sa couleur; en conséquence l'écran de modulation ET et le dispositif de filtre DFC forment un écran modulateur trichrome, par opposition au cas de la figure 2, où chaque écran de modulation réalise une image monochrome.

Le faisceau d'illumination FIL ayant été modulé par l'écran de modulation ET, il passe ensuite par un analyseur A, et se propage en direction d'un objectif de projection et d'un écran de projection (non représentés sur la figure 3).

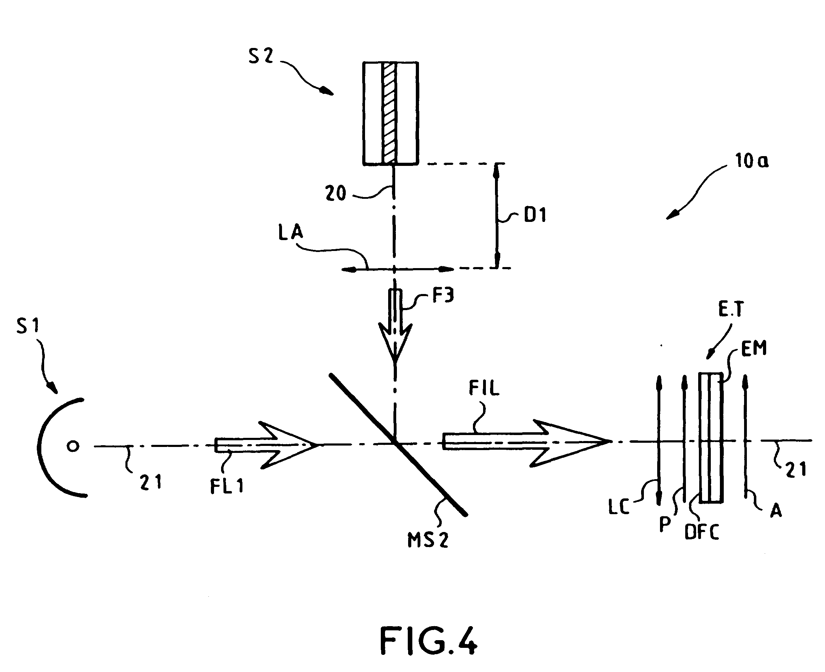

La figure 4 illustre une autre manière de réaliser la superposition, sur un même axe de propagation, des faisceaux de lumière FL1 et F3 produits respectivement par la première et la seconde source de lumière. Le but est de constituer un unique faisceau d'illumination FIL contenant comme dans le cas de l'exemple précédent, les trois bandes spectrales correspondant aux couleurs primaires, dans des rapports favorables à la balance colorimétrique.

Entre cette version et la version précédente montrée à la figure 3, la différence réside dans le fait que dans cette version, c'est le faisceau coloré F3 rouge produit par la seconde source S2 qui est réfléchi par le miroir dichroïque repéré MS2, et par suite le faisceau de lumière FL1, émis par la première source S1, est transmis par ce miroir dichroïque MS2.

En effet dans cette version, la première source S1 est située sur l'axe principal 21 sur lequel est également l'écran modulateur trichrome ET, alors que la seconde source S2 est sur l'axe 20 perpendiculaire à cet axe principal. Dans ces conditions, le miroir dichroïque MS2 doit être réalisé pour, d'une part, réfléchir le faisceau coloré F3 rouge, dont la longueur d'onde centrale est par exemple à 660 nanomètres comme dans l'exemple précédent ; et d'autre part pour transmettre, au moins partiellement, le faisceau FL1 compris entre 470 et 680 nanomètres.

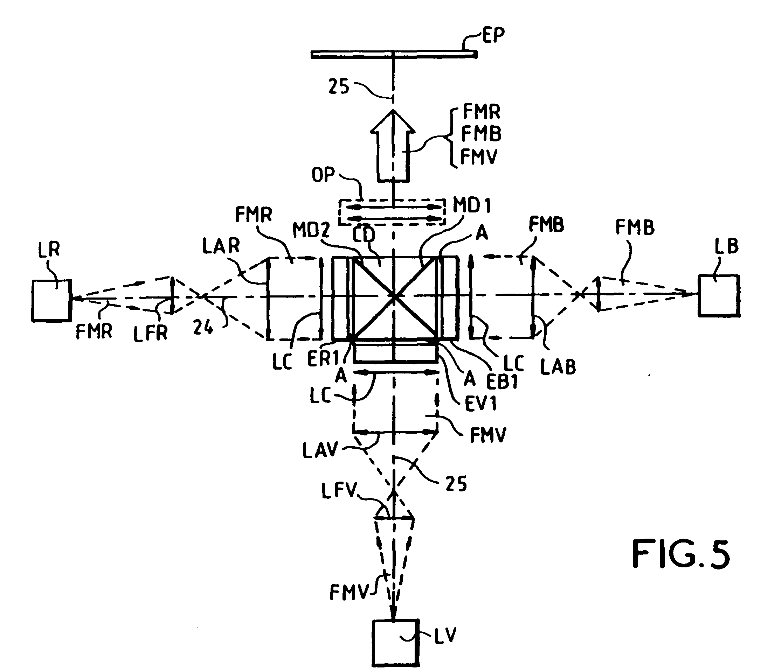

Un avantage de cette version vient du fait que le miroir dichroïque MS2 peut être réalisé, de façon en elle-même classique, pour être réfléchissant (vis-à-vis du faisceau coloré F3 dans l'exemple de la figure 5) pour une bande en longueurs d'onde relativement étroite. En conséquence, la bande en longueurs d'onde non transmise (dans le faisceau de lumière blanche FL1) par le miroir dichroïque MS1 est elle-même étroite.Cette possibilité qu'offrent les miroirs dichroïques de pouvoir présenter une fonction passe-bande étroite est bien connue.

Dans ces conditions, les lumens rouges contenus dans le faisceau de lumière FL1 peuvent être transmis par le miroir dichroïque MS2, pour la part qui n'est pas comprise dans la bande spectrale pour laquelle le miroir dichroïque MS2 est réfléchissant. Cela permet une plus grande latitude quant au choix de la longueur d'onde laser, laquelle longueur d'onde laser peut être située à un endroit quelconque du spectre rouge, en plein milieu par exemple, et non pas à l'extrémité de ce spectre comme dans l'exemple précédent.

Il est à noter que la superposition des faisceaux de lumière FL1, F3 produits par les différentes sources S1, S2, en vue de former un unique faisceau d'illumination FIL, peut s'appliquer de manière avantageuse aussi à l'éclairement de trois écrans de modulation monochromes, en séparant le faisceau d'illumination FIL en trois faisceaux monochromes suivant des techniques en elle-même classiques.

La figure 5 montre de façon schématique l'architecture d'un projecteur d'image trichrome utilisant, conformément à l'invention, une source laser monochromatique respective LR, LV, LB pour chaque couleur primaire rouge, verte et bleue.

Une source laser LR produit un faisceau monochromatique FMR, polarisé, correspondant à la couleur primaire rouge. Le faisceau monochromatique rouge se propage sur un axe 24, en direction d'une lentille de focalisation LFR dont l'action le rend convergent puis ensuite divergent. Après un trajet sur une distance d'extension utile à conférer au faisceau rouge FMR des dimensions suffisantes pour éclairer un écran de modulation, le faisceau rouge passe par une lentille d'adaptation LAR qui lui confère des rayons parallèles. Le faisceau rouge se propage ensuite en direction d'une lentille de champ LC, puis d'un écran de modulation ER1 du type par exemple écran matriciel (LCD) à cristaux liquide, destiné à produire une image monochrome rouge. Le faisceau rouge traverse ensuite un analyseur A, puis il pénètre dans un cube dichroïque CD comportant un miroir dichroïque MD1 sensible au rouge, miroir par lequel il est dévié sur un axe dit de projection 25 perpendiculaire à l'axe de propagation 24.

Un faisceau FMB monochromatique, polarisé, correspondant à la couleur primaire bleue, est délivré par une source laser LB. Le faisceau bleu FMB se propage sur l'axe 24 en direction du cube dichroïque CD, c'est-à-dire en sens contraire du faisceau rouge FMR. Le faisceau bleu FMB rencontre successivement une lentille de focalisation LFB, une lentille d'adaptation LAB, une lentille de champ LC, un écran de modulation EB1, un analyseur A, dont les actions sur le faisceau bleu FMB sont les mêmes que celles exercées par les éléments correspondants du faisceau rouge FMR. Le faisceau bleu FMB pénètre ensuite dans le cube dichroïque CD où il rencontre un second miroir dichroïque MD2 sensible à la composante bleue. D'une manière en elle-même classique les deux miroirs dichroïques sont imbriqués dans des plans perpendiculaires, de telle sorte que le faisceau bleu FMB, est réfléchi sur l'axe de projection 25.

Enfin un faisceau FMV monochromatique polarisé, correspondant à la couleur primaire verte, est délivré par une source laser LV. Il se propage sur l'axe de projection 25, en direction du cube dichroïque CD, en passant successivement par une lentille de focalisation LFV, une lentille d'adaptation LAV, une lentille de champ LC, un écran de modulation EV1, un analyseur A, dont les actions sont les mêmes que celles exercées par les éléments correspondants des faisceaux FMR, FMB.

Le faisceau vert FMV traverse le cube dichroïque CD sans subir de réflexion, de telle façon qu'il se propage sur l'axe de projection 25, avec les faisceaux rouge et bleu FMR, FMB, en direction d'un objectif de projection OP. Les trois faisceaux FMR, FMB, FMV portant chacun éventuellement une image monochrome, sont ensuite projetés sur l'écran de projection EP.

Cette configuration présente l'avantage d'une part, d'être très compacte, et d'autre part d'améliorer fortement l'efficacité lumineuse. On peut remarquer en effet, que cette configuration n'utilise que deux miroirs dichroïques MD1, MD2, pour superposer les faisceaux, et n'exige aucun miroir dichroïque pour la séparation des composantes spectrales du fait que les trois couleurs primaires sont fournies par des sources différentes. On doit remarquer que cette diminution du nombre des miroirs dichroïques a une action bénéfique à la fois, sur l'encombrement, l'efficacité lumineuse, et la complexité du projecteur d'images. En fait, dans la version de l'invention montrée à la figure 3, on obtient un rapport de transmission lumineuse, globalement pour les trois voies rouge, vert, bleu de l'ordre de 12 %.

Il est à noter qu'il est possible également d'éclairer un unique écran modulateur trichrome, avec les trois composantes spectrales correspondant aux trois couleurs primaires, utilisant une configuration semblable à celle décrite en référence à la figure 5, c'est-à-dire en utilisant trois sources LV, LR, LB produisant chacune la lumière d'un faisceau coloré suivant l'une des couleurs primaires. Les trois faisceaux colorés peuvent ensuite être superposés à l'aide de deux miroirs dichroïques MD1, MD2 croisés, comme dans l'exemple de la figure 5, afin de réaliser un faisceau de lumière blanche apte à éclairer un écran modulateur trichrome.

Cette description de l'invention a été faite à titre d'exemple non limitatif, en référence a des projections d'images du type à projection frontale, mais il est clair que l'invention s'applique aussi bien au cas des rétroprojecteurs. (en anglais "Rear-projector".

**Revendications**

1. Projecteur d'images comportant au moins un écran de modulation spatiale de la lumière (ET, EV, EB, ER), un générateur de lumière produisant de la lumière dans au moins trois bandes spectrales correspondant chacune à l'une des trois couleurs dites primaires, le générateur de lumière comportant au moins deux sources de lumière (S1, S2) pour produire la lumière des différentes bandes spectrales, caractérisé en ce que le générateur de lumière comporte comme première source (S1) une source blanche et comme deuxième source (S2) au moins une source laser essentiellement monochromatique dans une couleur pour laquelle le spectre de la source blanche est déficitaire.

2. Projecteur d'images selon la revendication 1, caractérisé en ce qu'il comporte des moyens (MS1, MS2) pour combiner la lumière produite par les deux sources de lumière en un unique faisceau d'illumination (FIL) contenant les trois bandes spectrales correspondant aux trois couleurs primaires.

3. Projecteur d'images selon la revendication 2, caractérisé en ce que les moyens pour combiner la lumière comportent au moins un miroir (MS1, MS2) du type sélectif en longueur d'onde, disposé de façon à transmettre au moins partiellement la lumière provenant de l'une des deux sources de lumière (S1, S2), et à réfléchir au moins partiellement la lumière provenant de l'autre source de lumière.

4. Projecteur d'images selon la revendication 3, caractérisé en ce que le miroir sélectif en longueur d'onde (MS2) est du type réfléchissant une bande spectrale étroite.

5. Projecteur d'image suivant l'une quelconque des revendications 2 à 4, caractérisé en ce que le faisceau d'illumination (FIL) éclaire globalement un écran de modulation spatiale de lumière (ET) associé à un dispositif à filtres colorés (DEC).

6. Projecteur d'image suivant l'une quelconque des revendications 1 à 4, caractérisé en ce qu'il comporte trois écrans de modulation spatiale (EV, EB, ER) de lumière, éclairés chacun par un faisceau de lumière appelé faisceau coloré correspondant à l'une des bandes spectrales des trois couleurs primaires.

7. Projecteur d'image suivant la revendication 6, caractérisé en ce qu'il comporte des seconds moyens (MDV, MDB) pour constituer le premier et le second des faisceaux colorés (F1, F2) avec exclusivement la lumière produite par la première source de lumière (S1), et pour constituer le troisième faisceau coloré F3 avec exclusivement la lumière produite par la seconde source de lumière (S2).

**8.** Projecteur d'image suivant la revendication 7, caractérisé en ce que les premier et second faisceaux colorés (F1, F2) correspondent aux couleurs primaires verte et bleue, et en ce que le troisième faisceau coloré (F3) correspond à la couleur primaire rouge.

**9.** Projecteur d'image suivant l'une des revendications 1 à 8, caractérisé en ce que la première source de lumière (S1) est du type lampe à arc.

**10.** Projecteur d'image suivant la revendication 6, caractérisé en ce que la seconde source de lumière (S2) est du type à semiconducteur.

**11.** Projecteur d'image selon l'une des revendications 1 à 10, caractérisé en ce que l'écran de modulation de lumière est un écran matriciel à cellules de cristal liquide.


**Claims**

**1.** Image projector including at least one screen for spatial modulation of light (ET, EG, EB, ER), a light generator producing light in at least three spectral bands each corresponding to one of three so-called primary colours, the light generator including at least two light sources (S1, S2) for producing the light of the various spectral bands, characterized in that the light generator includes, as first source (S1), a white source and, as second source (S2), at least one essentially monochromatic laser source in a colour for which the spectrum of the white source is deficient.

**2.** Image projector according to Claim 1, characterized in that it includes means (MS1, MS2) for combining the light produced by the two light sources into a single so-called illumination beam (FIL) containing the three spectral bands corresponding to the three primary colours.

**3.** Image projector according to Claim 2, characterized in that the means for combining the light include at least one mirror (MS1, MS2) of the wavelength-selective type, arranged so as to transmit at least partially the light originating from one of the two light sources (S1, S2), and to reflect at least partially the light originating from the other light source.

**4.** Image projector according to Claim 3, characterized in that the wavelength-selective mirror (MS2) is of the type reflecting a narrow spectral band.

**5.** Image projector according to any one of Claims 2 to 4, characterized in that the illumination beam (FIL) globally lights a screen for spatial modulation of light (ET) associated with a colour-filter device (DFC).

**6.** Image projector according to any one of Claims 1 to 4, characterized in that it includes three screens for spatial modulation of light (EG, EB, ER), each lit by a light beam termed the coloured beam and corresponding to one of the spectral bands of the three primary colours.

**7.** Image projector according to Claim 6, characterized in that it includes second means (MDG, MDB) for constructing the first and second coloured beams (FG, FB) exclusively with the light produced by the first light source (S1), and for constructing the third coloured beam (FR) exclusively with the light produced by the second light source (S2).

**8.** Image projector according to Claim 7, characterized in that the first and second coloured beams (FG, FB) correspond to the green and blue primary colours, and in that the third coloured beam (F3) corresponds to the red primary colour.

**9.** Image projector according to one of Claims 1 to 8, characterized in that the first light source (S1) is of the arc lamp type.

**10.** Image projector according to Claim 6, characterized in that the second light source (S2) is of the semiconductor type.

**11.** Image projector according to one of Claims 1 to 10, characterized in that the light modulation screen is a liquid crystal cell matrix screen.


**Patentansprüche**

**1.** Bildprojektor mit mindesten einem räumlichen Lichtmodulationsschirm (ET, EV, EB, ER) und einem Lichtgenerator, der Licht in mindesten drei Spektralbändern entsprechend je einer der drei sogenannten Primärfarben erzeugt und aus mindesten zwei Lichtquellen (S1, S2) zur Erzeugung des Lichts der verschiedenen Spektralbänder besteht, dadurch gekennzeichnet, daß der Lichtgenerator als erste Lichtquelle (S1) eine Quelle weißen Lichts und als zweite Lichtquelle (S2) mindestens eine Laserquelle enthält, die im wesentlichen monochromatisch ist und in einem Farbbereich liegt, für den das Spektrum der weißen Quelle energiearm ist.

**2.** Bildprojektor nach Anspruch 1, dadurch gekennzeichnet, daß er Mittel (MS1, MS2) zur Kombination des von den beiden Lichtquellen erzeugten Lichts in einem gemeinsamen Beleuchtungsstrahl (FIL) enthält, der die drei Spektralbänder entsprechend den drei Primärfarben aufweist.

3. Bildprojektor nach Anspruch 2, dadurch gekennzeichnet, daß die Mittel zur Kombination des Lichts mindesten einen Spiegel (MS1, MS2) enthalten, der wellenlängenselektiv und so angeordnet ist, daß zumindest teilweise das von einer der beiden Lichtquellen (S1, S2) kommende Licht durchgelassen wird und mindesten teilweise das von der anderen Lichtquelle kommende Licht reflektiert wird.

4. Bildprojektor nach Anspruch 3, dadurch gekennzeichnet, daß der wellenlängenselektive Spiegel (MS2) von der ein schmales Frequenzband reflektierenden Art ist.

5. Bildprojektor nach einem beliebigen der Ansprüche 2 bis 4, dadurch gekennzeichnet, daß der Beleuchtungsstrahl (FIL) einen räumlichen Lichtmodulationsschirm (ET) global beleuchtet, dem eine Farbfilteranordnung (DEC) zugeordnet ist.

6. Bildprojektor nach einem beliebigen der Ansprüche 1 bis 4, dadurch gekennzeichnet, daß er drei räumliche Lichtmodulationsschirme (EV, EB, ER) enthält, die je von einem farbigen Lichtstrahl entsprechend einem der Spektralbänder der drei Primärfarben beleuchtet werden.

7. Bildprojektor nach Anspruch 6, dadurch gekennzeichnet, daß er zweite Mittel (MDV, MDB) aufweist, die den ersten und den zweiten Farbstrahl (F1, F2) ausschließlich aus von der ersten Lichtquelle (S1) erzeugtem Licht bilden und die den dritten Farbstrahl (F3) ausschließlich aus von der zweiten Lichtquelle (S2) erzeugtem Licht bilden.

8. Bildprojektor nach Anspruch 7, dadurch gekennzeichnet, daß der erste und der zweite Farbstrahl (F1, F2) der grünen beziehungsweise blauen Primärfarbe entsprechen und daß der dritte Farbstrahl (F3) der roten Primärfarbe entspricht.

9. Bildprojektor nach einem der Ansprüche 1 bis 8, dadurch gekennzeichnet, daß die erste Lichtquelle (S1) eine Lichtbogenlampe ist.

10. Bildprojektor nach Anspruch 6, dadurch gekennzeichnet, daß die zweite Lichtquelle (S2) vom Halbleitertyp ist.

11. Bildprojektor nach einem der Ansprüche 1 bis 10, dadurch gekennzeichnet, daß der Lichtmodulationsschirm ein matrixartiger Schirm mit Flüssigkristallzellen ist.

FIG.1

EP 0 605 699 B1

# FIG.2

EP 0 605 699 B1

FIG.3

EP 0 605 699 B1

FIG.4

EP 0 605 699 B1

FIG.5